Europäisches Patentamt

European Patent Office

Office européen des brevets

(19)

(11) EP 0 784 891 B1

(12) **EUROPÄISCHE PATENTSCHRIFT**

(45) Veröffentlichungstag und Bekanntmachung des Hinweises auf die Patenterteilung:
**25.06.2003 Patentblatt 2003/26**

(21) Anmeldenummer: **95933313.9**

(22) Anmeldetag: **06.10.1995**

(51) Int Cl.⁷: $H04L\ 9/08$

(86) Internationale Anmeldenummer:
**PCT/DE95/01368**

(87) Internationale Veröffentlichungsnummer:
**WO 96/011540 (18.04.1996 Gazette 1996/17)**

(54) **VERFAHREN ZUR DATENSICHERUNG IN EINEM BIDIREKTIONAL BETREIBBAREN TEILNEHMERANSCHLUSSNETZ**

DATA SECURING PROCESS IN A SUBSCRIBER ACCESS NETWORK WHICH CAN BE OPERATED BIDIRECTIONALLY

PROCEDE DE PROTECTION DE DONNEES DANS UN RESEAU DE RACCORDEMENT D'ABONNES POUVANT FONCTIONNER DE MANIERE BIDIRECTIONNELLE

(84) Benannte Vertragsstaaten:
**AT BE CH DE FR GB IT LI LU NL SE**

(30) Priorität: **07.10.1994 DE 4435901**

(43) Veröffentlichungstag der Anmeldung:
**23.07.1997 Patentblatt 1997/30**

(73) Patentinhaber: **SIEMENS AKTIENGESELLSCHAFT 80333 München (DE)**

(72) Erfinder:
- **MÖHRMANN, Karl, Heinz D-81369 München (DE)**
- **STEIN, Karl-Ulrich D-82008 Unterhaching (DE)**

(56) Entgegenhaltungen:
**EP-A- 0 411 597          DE-A- 4 204 461**

- **PROCEEDINGS OF ISSLS'88 - THE INTERNATIONAL SYMPOSIUM ON SUBSCRIBER LOOPS AND SERVICES, BOSTON (US), 11. - 16.September 1988 NEW YORK (US), Seiten 179-183, K.A.OAKLEY ET AL. 'PASSIVE FIBRE LOCAL LOOP FOR TELEPHONY WITH BROADBAND UPGRADE' in der Anmeldung erwähnt**
- **INTERNATIONAL JOURNAL OF DIGITAL AND ANALOG COMMUNICATION SYSTEMS, Bd. 6, Nr. 3, Juli 1993 - September 1993 CHICHESTER (UK), Seiten 143-149, H.KELLER ET AL. 'OPTICAL BROADBAND ACCESS USING ATM ON A PASSIVE OPTICAL NETWORK' in der Anmeldung erwähnt**
- **PATENT ABSTRACTS OF JAPAN vol. 017 no. 646 (E-1467) ,30.November 1993 & JP,A,05 207466 (NEC HOME ELECTRONICS) 13.August 1993,**

EP 0 784 891 B1

**Beschreibung**

Neuere Entwicklungen der Fernmeldetechnik führen in der Ebene der Teilnehmeranschlußleitungen zu passiven optischen Telekommunikationssystemen, in denen jeweils eine Mehrzahl von dezentralen Einrichtungen (Teilnehmerstellen oder jeweils eine Mehrzahl von Teilnehmerstellen zusammenfassende sog. Distant Units) jeweils über eine eigene Lichtwellenleiter-Anschlußleitung mit einem optischen Verzweiger verbunden ist, der direkt oder über wenigstens einen weiteren optischen Verzweiger mit einem gemeinsamen Lichtwellenleiteranschluß einer - insbesondere durch eine Vermittlungsstelle gegebenen - zentralen Einrichtung über einen Lichtwellenleiter-Bus verbunden ist (EP-A-0 171 080; ISSLS '88, Conf. Papers 9.4.1...5; BR Telecom Technol. J. 17(1989)2, 100...113).

In einem solchen passiven optischen Telekommunikationsnetz kann die Signalübertragung von der zentralen Einrichtung aus "downstream" zu den dezentralen Einrichtungen hin in einem TDM-Zellenstrom vor sich gehen, aus dem jede dezentrale Einrichtung nur die für ebendiese dezentrale Einrichtung bestimmten Zellen aufnimmt, und die Signalübertragung von den dezentralen Einrichtungen aus "upstream" zur zentralen Einrichtung hin kann in einem TDMA-Verfahren vor sich gehen, demzufolge eine dezentrale Einrichtung einen jeden Burst mit Hilfe einer von der zentralen Einrichtung her einrichtungsindividuell eingestellten Verzögerungseinrichtung synchronisiert aussendet (EP-A-0 460 398). Die Signalübertragung downstream von der zentralen Einrichtung aus zu den dezentralen Einrichtungen hin und die Signalübertragung upstream von den dezentralen Einrichtungen aus zur zentralen Einrichtung hin kann dabei auch in ein- und demselben Wellenlängenfenster (z.B. im Wellenlängengleichlagebetrieb bei 1,3 µm) vor sich gehen.

Die Einführung neuer Breitbandkommunikationsdienste hängt ganz allgemein ab von Art und Umfang der bereits vorhandenen Fernmeldeinfrastrukturen mit den darin bereitgestellten Telekommunikationsdiensten und von der Nachfrage nach Breitbandtelekommunikationsmöglichkeiten. Dabei wird im Bereich der Privathaushalte das potentiell grösste Anschlußvolumen gesehen; dieses Anschlußpotential konkretisiert sich indessen zu einer effektiven Anschlußnachfrage nicht ohne entsprechend niedrige Kosten eines Breitband-Teilnehmeranschlusses.

Um einem Teilnehmer die Nutzung von Breitband-ISDN-Diensten (genannt werden z.B. interaktiver Videoabruf Video on Demand (VoD), Teleshopping, Informationsrecherche, aber auch Schmalbanddienste wie (N-)ISDN oder herkömmliche Telefonie (POTS)) zu ermöglichen, werden z.Zt. verschiedene Anschlußmöglichkeiten diskutiert. Besonders attraktiv sind Lösungen, bei denen bereits vorhandene Infrastruktur verwendet werden kann. Ein entsprechendes Medium stellen z.B. die Koaxialkabelnetze der CATV-Anbieter dar: Der Frequenzbereich von beispielsweise 50 - 450 Mhz (in Deutschland) wird von konventionellen Analogsignal-Fernsehkanälen genutzt; der Bereich unter- und oberhalb der Analogsignal-Fernsehverteilung ist bislang frei und läßt sich für neue Dienste nutzen. In den USA wird von einigen Cable-TV-Gesellschaften ein Teilbereich des bislang freien Bereichs für sog. Cablephone verwendet. Andere Betreiber denken an ein umfassenderes System, das einen Großteil der oben genannten Dienste im Rahmen eines Access-Networks z.B. auf ATM-Basis bietet, wobei in der Regel den koaxialen Teilnetzen wegen der begrenzten Reichweite eine optische Zubringerleitungen (Fiber Feeder) vorgeschaltet sein kann (TELEPHONY, 01.11.93, 48 ... 53).

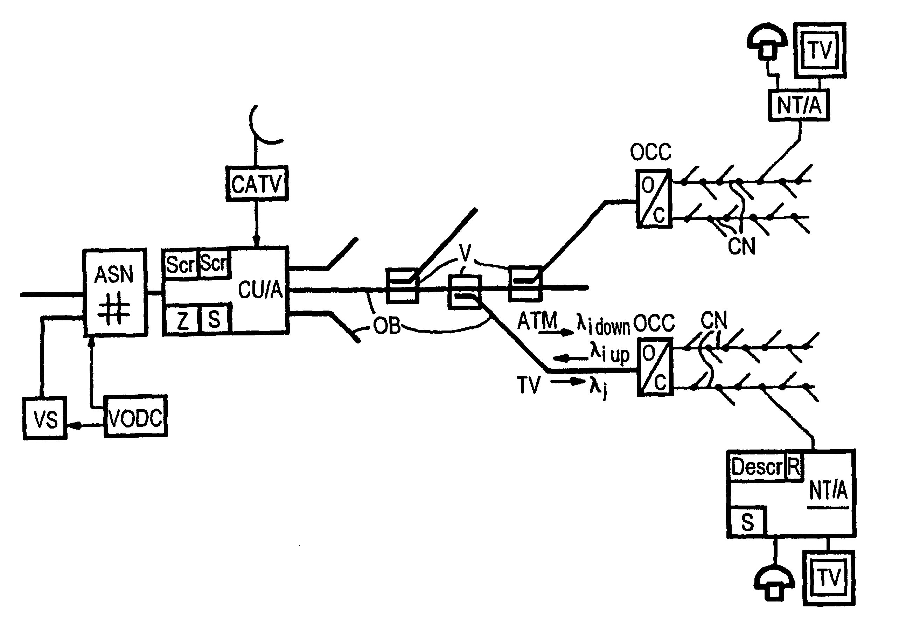

Man hat auch schon neben einem passiven optischen Netz (PON) mit Erweiterung durch ein Koaxialleitungs-Baumnetz für unidirektionale Verteilkommunikation (TV) ein weiteres passives optisches Netz (PON) für bidirektionale interaktive vermittelte Telekommunikation eingesetzt (Der Fernmeldeingenieur 46(1992)10, Bild 11.2 - System OPAL 4).

In einer besonders vorteilhaften Gestaltung eines Teilnehmeranschlußnetzes sind die Koaxialleitungs-Baumnetze jeweils über eine Konvertereinrichtung an ein optische Verzweiger enthaltendes Lichtwellenleiter-Baumnetz für sowohl bidirektionale Telekommunikationsdienste, vorzugsweise im Wellenlängengetrenntlagebetrieb, als auch unidirektionale Verteilkommunikationsdienste angeschlossen (DE-P 44 06 509.4); dies ermöglicht eine sehr wirtschaftliche Versorgung einer großen Anzahl von Teilnehmern sowohl mit Verteilkommunikationsdiensten als auch mit interaktiven vermittelten Telekommunikationsdiensten. Dabei kann das Lichtwellenleiter-Baumnetz ein passives optisches Netz oder ein mit Verstärkern versehenes aktives optisches Netz sein; die einzelnen Koaxialleitungs-Baumnetze können unabhängig davon und von einander verstärkerfreie passive bzw. mit Verstärkern versehene aktive Koaxialleitungs-Baumnetze sein. Diese Flexibilität ermöglicht die Realisierung auch von Netzen mit ganz unterschiedlichen Reichweiten.

In mit passiven Faserverzweigern gebildeten optischen Doppel-Stern-Netzen, in denen jede dezentrale Telekommunikationseinrichtung die von der zentralen Telekommunikationseinrichtung ausgesendeten Downstream-Informationen empfängt und daraus nur die für sie bestimmten Informationen zwecks Weitergabe an den (die) angeschlossenen Teilnehmer aussortiert, besteht grundsätzlich die Möglichkeit eines Zugriffs auf Informationen, die für andere Teilnehmer bestimmt sind, die an andere dezentrale Telekommunikationseinrichtungen angeschlossen sind.

Eine wirkungsvolle Sicherung eines passiven optischen Telekommunikationssystems gegen unberechtigten Zugriff auf die darin übertragenen Digitalsignale bietet ein (aus DE-C1-42 04 461 bekanntes) Verfahren zur Datensicherung in einem Telekommunikationssystem mit einer zentralen Telekommunikationseinrichtung und einer Mehrzahl von dezentralen Telekommunikationseinrichtungen, die jeweils über eine eigene Lichtwellenleiter-Anschlußleitung mit einem optischen Verzweiger verbunden sind, der direkt oder über wenigstens einen weiteren optischen Verzweiger mit einem gemeinsamen Lichtwellenleiteranschluß der zentralen Telekommunikationseinrichtung über einen Lichtwellenleiter-Bus verbunden ist, wobei die Signalübertragung von der zentralen Telekommunikationseinrichtung aus zu den dezentralen Einrichtungen hin in einem Multiplexrahmen oder in einem ATM-Zellenstrom vor sich geht und die Signalübertragung von den dezentralen Telekommunikationseinrichtungen aus zur zentralen Einrichtung hin jeweils in einem der jeweiligen dezentralen Einrichtung zugeordneten Zeitkanal des Multiplexrahmens vorzugsweise unter adaptiver Steuerung der Zeitlage des Zeitkanals in einem TDMA-Verfahren bzw. mittels ATM-Zellen in einem TDMA-Verfahren vor sich geht; diesem Verfahren zufolge wird aus einem in einer dezentralen Telekommunikationseinrichtung vorgegebenen geheimen Schlüssel ein öffentlicher Schlüssel ermittelt, der in Aufwärtsrichtung zu der zentralen Telekommunikationseinrichtung übermittelt wird, wo er zum Verschlüsseln von (Sekundarschlüssel-) Informationen zur Anpassung der dezentralen Einrichtung an in der zentralen Einrichtung für diese dezentrale Einrichtung individuell vorgesehene, wiederholt geänderte Übertragungsmodalitäten benutzt wird.

Die Problematik eines unberechtigten Zugriffs auf in einem Telekommunikationssystem übertragene Digitalsignale stellt sich indessen nicht nur in Passiven Optischen Netzen (PON) der im vorstehenden umrissenen Art, sondern auch in anderen Point-to-Multipoint-Netzen, und ihr kann auch dort nach dem (aus DE-C1-42 04 461) bekannten Verfahrensprinzip begegnet werden. So kann insbesondere auch in einem (vorzugsweise Zellular-)Funknetz mit einer Mehrzahl von Funkteilnehmern und wenigstens einer Feststation zur Datensicherung jeweils aus einem beim Funkteilnehmer vorgegebenen geheimen Schlüssel ein öffentlicher Schlüssel ermittelt werden, der in Aufwartsrichtung zur Feststation übermittelt wird, wo er zum Verschlüssein von (Sekundärschlüssel-)Informationen zur Anpassung des Funkteilnehmers an in der Feststation für diesen Funkteilnehmer individuell vorgesehene, wiederholt geänderte Übertragungsmodalitäten benutzt wird.

Die Erfindung zeigt nun einen Weg zu einer wirkungsvollen Sicherung des Telekommunikationsverkehrs gegen unberechtigten Zugriff auf die darin übertragenen Digitalsignale in einem bidirektional betreibbaren Teilnehmeranschlußnetz mit einem oder mehreren jeweils einer Mehrzahl von teilnehmerseitigen Netzabschlußeinheiten gemeinsamen, sich zwischen solchen teilnehmerseitigen Netzabschlußeinheiten und einer übergeordneten Verbindungseinrichtung erstreckenden Koaxialleitungs-Baumnetz(en).

Die Erfindung betrifft ein Verfahren zur Datensicherung in einem Telekommunikationssystem mit einer Mehrzahl von dezentralen Telekommunikationseinrichtungen und einer demgegenüber zentralen Telekommunikationseinrichtung, demzufolge aus einem in einer dezentralen Telekommunikationseinrichtung vorgegebenen geheimen Schlüssel ein öffentlicher Schlüssel ermittelt wird, der in Aufwärtsrichtung zur zentralen Telekommunikationseinrichtung übermittelt wird, wo er zum Verschlüsseln von (Sekundärschlüssel-) Informationen zur Anpassung der dezentralen Einrichtung an in der zentralen Einrichtung für diese dezentrale Einrichtung individuell vorgesehene, wiederholt geänderte Übertragungsmodalitäten benutzt wird;

dieses Verfahren ist dadurch gekennzeichnet, daß

in einem bidirektional betreibbaren Teilnehmeranschlußnetz mit einem oder mehreren jeweils einer Mehrzahl von teilnehmerseitigen Netzabschlußeinheiten gemeinsamen, sich zwischen solchen teilnehmerseitigen Netzabschlußeinheiten und einer übergeordneten Verbindungseinrichtung erstreckenden Koaxialleitungs-Baumnetz(en),

in dem diese(s) Koaxialleitungs-Baumnetz(e) jeweils über eine Konvertereinrichtung an einen Lichtwellenleiter (OB) vorzugsweise eines optische Verzweiger enthaltenden Lichtwellenleiter-Baumnetzes angeschlossen und über diese(n) Lichtwellenleiter mit der zugehörigen Verbindungseinrichtung verbunden sein kann (können)

und in dem die Signalübertragung von der zugehörigen Verbindungseinrichtung aus zu den teilnehmerseitigen Netzabschlußeinheiten hin in einem Multiplexrahmen oder in einem ATM-Zellenstrom vor sich geht und die Signalübertragung von den teilnehmerseitigen Netzabschlußeinheiten aus zu der zugehörigen Verbindungseinrichtung hin jeweils in einem der jeweiligen teilnehmerseitigen Netzabschlußeinheit zugeordneten Zeitkanal des Multiplexrahmens vorzugsweise unter adaptiver Steuerung der Zeitlage des Zeitkanals in einem TDMA-Verfahren bzw. mittels ATM-Zellen in einem TDMA-Verfahren vor sich geht,

zur Datensicherung jeweils aus einem in der teilnehmerseitigen Netzabschlußeinheit vorgegebenen geheimen Schlüssel der öffentliche Schlüssel ermittelt wird, der in Aufwärtsrichtung zur Verbindungseinrichtung übermittelt wird, wo er zum Verschlüsseln von (Sekundarschlüssel-)Informationen zur Anpassung der teilnehmerseitigen Netzabschlußeinheit an in der Verbindungseinrichtung für diese teilnehmerseitigen Netzabschlußeinheit individuell vorgesehene, wiederholt geänderte Übertragungsmodalitäten benutzt wird.

Die Erfindung bringt den Vorteil mit sich, auf einen Austausch geheimer Schlüssel verzichten zu können und dennoch eine hohe Sicherheit der von der Verbindungseinrichtung aus downstream zu den teilnehmerseitigen Netzabschlußeinrichtungen hin übertragenen Digitalsignale gegen unberechtigten Zugriff und Mithören zu gewährleisten, selbst wenn es sich um relativ lange bestehende Verbindungen (insbes. Standverbindungen) oder auch asymmetrische Verbindungen mit unterschiedlichen Datenraten in den beiden Übertragungsrichtungen handelt. Der erforderliche Rechenaufwand für ein Public-Key-Verfahren ist im Prinzip zwar hoch; da die verschlüsselte Mitteilung neuer Übertragungsmodalitäten aber nur gelegentlich, nämlich im Zusammenhang mit einer von der Verbindungseinrichtung in gewissen zeitlichen Abständen durchgeführten Änderung solcher Modalitäten, notwendig ist, sind die Errechnung des Schlüssel und Verschlüsselung nicht zeitkritisch, so daß sie mit einem relativ einfachen Rechenwerk off-line per Software bewirkt werden können.

Zur eigentlichen Sicherung des laufenden Digitalsignalstroms kann in weiterer Ausgestaltung der Erfindung die Zuordnung der Zeitschlitze zu den einzelnen teilnehmerseitigen Netzabschlußeinheiten im Rahmen des TDM- Downstream-Signals wiederholt geändert werden, indem die übergeordnete Verbindungseinrichtung mittels eines Zufallszahlengenerators eine zufällige neue Zeitschlitzzuordnung für die einzelnen teilnehmerseitigen Netzabschlußeinheiten ermittelt und die zeitliche Lage der (des) ihr zugeordneten Zeitschlitze(s) mit einem von der jeweiligen teilnehmerseitigen Netzabschlußeinheit übermittelten öffentlichen Schlüssel verschlüsselt der betreffenden teilnehmerseitigen Netzabschlußeinheit mitteilt, die diese Mitteilung mit dem zugehörigen geheimen Schlüssel entschlüsselt, wonach die Änderung von einem bestimmten. Multiplexrahmen an durchgeführt wird.

Zur weiteren Verbesserung der Datensicherheit gegen einen mit entsprechend hohem rechnerischem Aufwand prinzipiell nicht auszuschließenden Angriff auf den geheimen Schlüssel kann in weiterer Ausgestaltung der Erfindung die teilnehmerseitige Netzabschlußeinheit nach einer bestimmten Anzahl von Multiplexrahmen einen von ihr errechneten neuen öffentlichen Schlüssel der übergeordneten Verbindungseinrichtung übermitteln, die ihrerseits wiederum nach Ermittlung einer neuen Zeitschlitzzuordnung zu den teilnehmerseitigen Neczabschlußeinheiten und neuem Verschlüsseln der jeweiligen Zeitschlitzlage jeder teilnehmerseitigen Netzabschlußeinheit individuell die Umordnung der Zeitschlitzzuteilung mitteilt, die danach von einem bestimmten Multiplexrahmen an durchgeführt wird.

Nach einer anderen Ausgestaltung der Erfindung kann die Anfangsstellung und/oder die Struktur von in der übergeordneten Verbindungseinrichtung vorgesehenen, den einzelnen teilnehmerseitigen Netzabschlußeinheiten zugeordneten Scramblern und von in den teilnehmerseitigen Netzabschlußeinheiten vorgesehenen Descramblern zu Rahmenbeginn wiederholt geändert wird, indem die übergeordnete Verbindungseinrichtung mittels eines Zufallszahlengenerators jeweils eine zufällige neue Anfangsstellung und/oder Struktur für die den einzelnen teilnehmerseitigen Netzabschlußeinheiten zugeordneten Scrambler ermittelt und die zugehörige Anfangsstellung und/oder Struktur des zugehorigen Descramblers mit einem von der jeweiligen teilnehmerseitigen Netzabschlußeinheit übermittelten öffentlichen Schlüssel verschlüsselt der betreffenden teilnehmerseitigen Netzabschlußeinheit mitteilt, die diese Mitteilung mit dem zugehörigen geheimen Schlüssel entschlüsselt, wonach die Änderung von einem bestimmten Pulsrahmen an durchgeführt wird.

Diese Modifikation, die auch auf einzelne dezentrale Telekommunikationseinrichtungen mit besonders sicherheitsbedürftigen Teilnehmern beschränkt werden kann, ist auch bei Übertragung von ATM-Zellen anwendbar: Das in der Zelle enthaltene Nutzsignal wird in der Verbindungseinrichtung verscrambelt, und nur die das Ziel der ATM-Zelle bildende Netzabschlußeinheit weiß, wie das Signal zu descrambeln ist, da die zu Beginn des Nutzinformationsteils (payload) der Zelle erforderliche Anfangsstellung und ggf. auch die Struktur des Scramblers nur ihr verständlich verschlüsselt mitgeteilt wurden. Zur weiteren Verbesserung der Datensicherheit gegen einen Angriff auf den geheimen Schlüssel kann in weiterer Ausgestaltung der Erfindung die teilnehmerseitige Netzabschlußeinheit nach einer bestimmten Anzahl von Pulsrahmen einen von ihr errechneten neuen öffentlichen Schlüssel der übergeordneten Verbindungseinrichtung übermitteln, die ihrerseits wiederum nach Ermittlung einer neuen Scrambler-Anfangsstellung und /oder Struktur und neuem Verschlüsseln der jeweils zugehörigen Descrambler-Anfangsstellung und/ oder Struktur jeder teilnehmerseitigen Netzabschlußeinheit individuell die Änderung der Anfangsstellung und /oder Struktur mitteilt, die danach von einem bestimmten Pulsrahmen an durchgeführt wird.

Nach einer anderen Ausgestaltung der Erfindung kann die Zuordnung von Adressen zu den einzelnen teilnehmerseitigen Netzabschlußeinheiten wiederholt geändert wird, indem die übergeordnete Verbindungseinrichtung mittels eines Zufallszahlengenerators eine zufällige neue Adressenzuordnung für die einzelnen teilnehmerseitigen Netzabschlußeinheiten ermittelt und die jeweilige neue Adresseninformation mit einem von der jeweiligen teilnehmerseitigen Netzabschlußeinheit übermittelten öffentlichen Schlüssel verschlüsselt der betreffenden teilnehmerseitigen Netzabschlußeinheit mitteilt, die diese Mitteilung mit dem zugehörigen geheimen Schlüssel entschlüsselt, wonach die Änderung von einem bestimmten Multiplexrahmen an berücksichtigt wird.

Dabei kann die teilnehmerseitige Netzabschlußeinheit nach einer bestimmten Anzahl von Multiplexrahmen einen von ihr errechneten neuen öffentlichen Schlüssel der übergeordneten Verbindungseinrichtung übermitteln, die ihrerseits wiederum nach Ermittlung einer neuen Adressenzuordnung zu den teilnehmerseitigen Netzabschlußeinheiten und neuem Verschlüsseln der jeweiligen Adresseninformation jeder teilnehmerseitigen Netzabschlußeinheit individuell die Umordnung der Adressenzuteilung mitteilt, die danach von einem bestimmten Multiplexrahmen an berücksichtigt wird.

Alle diese - generell in Punkt-zu Multipunkt-Netzen einsetzbaren - Verfahrensvorgänge brauchen keineswegs für alle dezentralen Einrichtungen gleichzeitig abzulaufen; es genügt vielmehr, daß in weiterer Ausgestaltung der Erfindung die Übertragungsmodalitäten für verschiedene teilnehmerseitige Netzabschlußeinheiten oder Gruppen von teilnehmerseitigen Netzabschlußeinheiten zu verschiedenen Zeitpunkten geändert werden, was einen Angriff weiter erschwert.

Die Erfindung wird nachfolgend noch weiter erläutert.

In der Zeichnung ist schematisch in einem zum Verständnis der Erfindung erforderlichen Umfang ein bidirektional betreibbares Teilnehmeranschlußnetz dargestellt. Dabei sind im rechten Teil der Zeichnung Koaxialleiternetze CN in der üblichen Baumstruktur angedeutet, wie sie in der Regel bereits verlegt sein werden. Teilnehmerseitig sind die Koaxialleiter jeweils mit einer Netzabschlußeinrichtung NT/A abgeschlossen, welche ihre Empfangs- und Sendesignale jeweils derart konvertieren möge, daß der Anschluß gängiger Endgeräte möglich ist; eine Netzabschlußeinrichtung NT/A weist z. B. Anschlüsse für Verteilfernsehen bzw. Video on Demand, für herkömmliche Telefonie (POTS) u./o. Schmalband-ISDN oder auch für einen beliebigen Breitband-ISDN-Dienst auf.

Auf der teilnehmerabgewandten Seite sind die Koaxialleiternetze CN jeweils über eine Opto-/Coax-Konvertereinrichtung (Optical/Coax-Converter) OCC an eine optische Anschlußleitung eines über optische Verzweiger (Splitter) V verzweigten Lichtwellenleiternetzes OB angeschlossen, welches die Koaxialleiternetze mit einer vorzugsweise mit einem (ATM-) CrossConnect gebildeten Verbindungseinrichtung (Connection Unit) CU/A verbindet. An eine solche Verbindungseinrichtung CU/A können, wie dies auch in der Zeichnung angedeutet ist, mehrere derartige Lichtwellenleiternetze OB angeschlossen sein; in entsprechender Weise können, wie dies ebenfalls in der Zeichnung angedeutet ist, an eine Konvertereinrichtung OCC mehrere, z.B. bis zu vier, Koaxialleiter-Subnetze CN angeschlossen sein. Wenn ein Koaxialleiternetz CN den Anschluß von z.B. 100 Teilnehmern ermöglicht, bedient die Konvertereinrichtung OCC z.B. 400 Teilnehmer und die Verbindungseinrichtung (Connection Unit) CU/A z.B. 2000 bis 4000 Teilnehmer.

Die Übertragung im Teilnehmeranschlußnetz kann nach dem Synchronen Transfer-Modus STM oder auf der Basis von ATM-Zellen (cell-based) mit einem systemspezifischen Overhead vor sich gehen. Dabei wird in der Übertragungsrichtung zum Teilnehmer hin (downstream) die Datenrate mit z.B. 622 Mbit/s grösser sein als die Datenrate in der umgekehrten Übertragungsrichtung (upstream) mit z.B. 155 Mbit/s, wobei aus übertragungstechnischer Sicht die downstream-Übertragung in mehreren Kanälen (z.B. in vier Kanälen à 155 Mbit/s) vor sich gehen kann.

In dem in der Zeichnung skizzierten System werden analoge TV-Verteilsignale von einer Kopfstelle (CATV Headend) her in die den angeschlossenen Teilnehmern gemeinsame Verbindungseinrichtung (Connection Unit) CU/A eingespeist und zu allen angeschlossenen Teilnehmern hin übertragen. Diese Fernsehsignale können beim Teilnehmer von einem an dessen Netzabschlußeinrichtung NT/A angeschlossenen, in der Zeichnung mit TV bezeichneten Fernsehempfänger in üblicher Weise empfangen werden.

Neben den analogen TV-Signalen mögen in dem in der Zeichnung skizzierten Telekommunikationssystem der Verbindungseinrichtung (Connection Unit) CU/A digitale Signale im ATM-Format zugeführt werden. Solche Signale können z.B. digitale Videosignale eines (auch einen ATM-Rückkanal für die Programmwahl durch den TV-Teilnehmer einschliessenden) Video-on-Demand-Dienstes oder auch breitbandige interaktive Datensignale sein, wobei die digitalen Videosignale mittels eines entsprechenden, in der Zeichnung nicht gesondert dargestellten Zusatzgerätes (Set-Top-Box) ebenfalls vom Fernsehempfänger TV empfangen werden.

Des weiteren können in dem in der Zeichnung skizzierten System in beiden Richtungen schmalbandige ATM-Sprach- und ggf. auch Datensignale übertragen werden, was in der Zeichnung durch ein an die Netzabschlußeinrichtung NT/A angeschlossenes Telefon angedeutet wird. Weitere Dienste, welche den Anschluß weiterer Endgeräte an die jeweilige Netzabschlußeinrichtung NT/A erfordern können, sind möglich, ohne daß dies in der Zeichnung noch dargestellt werden müsste.

Die ATM-Signale werden über eine ATM-Vermittlungseinrichtung ASN geleitet. Für Video-On-Demand ist dabei ein Video-Server VS erforderlich, in welchem die abzurufenden Video-Programme (Filme) gespeichert sind, und zwar in der Regel in digitaler und datenkomprimierter Form, beispielsweise nach dem bei ISO-MPEG erarbeiteten MPEG2-Algorithmus mit z.B. 4 Mbit/s. Der Server VS möge von einem Controller VODC gesteuert werden, welcher von den angeschlossenen Teilnehmern über den jeweiligen Rückkanal kommende Signalisierungsinformationen auswertet und sowohl die Programmausgabe aus dem Video-Server VS als auch die ATM-Koppeleinrichtung ASN entsprechend steuert.

Die generelle Verwendung des Asynchronen Transfer-Modus (ATM) für die digitalen Signale aller Dienste (mit Ausnahme des auf Analogsignalübertragung basierenden TV-Verteildienstes) ist auf Grund seiner hohen Flexibilität außerordentlich vorteilhaft. Es lassen sich Signale mit unterschiedlichen, beliebigen Datenraten beliebig mischen; eine Wahl von Datenraten entsprechend bestimmten Hierarchiestufen ist überflüssig. Dies ist insbesondere auch für Videoübertragung sehr interessant, da zum einen eine allgemein vereinbarte Datenrate für ein Videosignal ohnehin nicht existiert und zum ändern durch Wahl unterschiedlicher Datenraten unterschiedliche Bildqualitäten geboten werden können.

Der Zugriff der Teilnehmer (NT/A) auf das Netz unterliegt einer TDMA-Zugriffsprozedur; solche TDMA-Zugriffsprozeduren sind (beispielsweise aus Intern. J. of Digital and Analog Communication Systems, 6 (1993), 143 ... 149,) bekannt und brauchen hier nicht weiter erläutert zu werden, zumal dies zum Verständnis der Erfindung nicht erforderlich ist. Die Zugriffsprozedur für den TDMA-Zugriff auf das Netz in upstream-Richtung kann für das ganze Teilnehmeranschlußnetz CN, OB wirksam sein. Alternativ dazu sind für das Lichtwellenleiter-Baumnetz und einzelne Koaxialleiter-Baumnetze auch separate Zugriffsprozeduren für den TDMA-Zugriff in upstream-Richtung möglich, wobei der Zugriff auf das Lichtwellenleiter-Baumnetz von der entsprechend ausgestatteten jeweiligen Konvertereinrichtung OCC bewirkt wird.

Die Trennung der interaktiven Telekommunikationsdienste von den Verteildiensten geschieht in der Regel durch Wellenlängenmultiplex: Wie dies auch in der Zeichnung angedeutet ist, werden die Signale der interaktiven Dienste auf Wellenlängen $\lambda_i$ down und $\lambda_i$ up und diejenigen der Verteildienste auf Wellenlängen $\lambda_j$ transportiert. Dabei ist durch die Indices i und j angedeutet, daß das Wellenlängenmultiplexprinzip nicht nur zur Dienstetrennung, sondern ggf. auch zur Kapazitätserhöhung Anwendung finden kann. Jeder Konvertereinrichtung kann dabei ein oder mehrere Wellenlängenpaar(e) individuell zugeordnet sein.

In dem in der Zeichnung skizzierten Ausführungsbeispiel sind die Netzabschlußeinheiten NT/A jeweils mit einem Descrambler Descr versehen, der das für die betreffende Netzabschlußeinheit bestimmte, in der zugehörigen Verbindungseinrichtung CU/A verscrambelte Digitalsignal entscrambelt. Die Verbindungseinrichtung CU/A weist zum Verscrambeln je Netzabschlußeinheit NT/A jeweils einen eigenen Scrambler Scr, Scr, ... auf. Die Scrambler müssen nicht in Hardware realisiert sein, sondern können, ebenso wie die Descrambler, mittels Software realisiert sein oder mittels einer einzigen, umschaltbaren Hardware-Struktur. Scrambler und Decrambler werden wiederholt verändert; dazu wird die notwendige Anfangsstellung für den Descrambler Descr der Netzabschlußeinheit NT/A jeweils rechtzeitig von der Verbindungseinrichtung CU/A mit einem sog. Public Key verschlüsselt mitgeteilt. Hierzu geben sich die Netzabschlußeinheiten NT/A einen geheimen Schlüssel vor und ermitteln dazu einen öffentlichen Schlüssel, was jeweils mit einem in den Netzabschlußeinheiten NT/A vorgesehenen Rechner R geschehen kann. Mit dem zur Verbindungseinrichtung CU/A hin übertragenen öffentlichen Schlüssel verschlüsselt wird die genannte Information über die Anfangsstellung des Decramblers Descr gewissermaßen als eine Sekundärschlüsselinformation von der Verbindungseinrichtung CU/A ausgesendet; entschlüsselt werden kann diese Information über die geänderten Übertragungsmodalitäten nur mit dem zugrunde liegenden geheimen Schlüssel und damit nur von derjenigen Netzabschlußeinheit NT/A, für die die betreffende Information bestimmt ist.

Public-Key-Verfahren sind an sich (z.B. aus ntz 38 (1985) 9, 636...638 bekannt; sie verwenden zur Schlüsseibildung sog. one-way-Funktionen. Bei one-way-Funktionen handelt es sich um Funktionen, deren Funktionswert relativ einfach zu berechnen ist, während die Berechnung der Inversen kaum möglich ist. "Einfach" und "kaum möglich" meint dabei den rechnerischen Aufwand und hängt somit vom Entwicklungsstand der jeweiligen Computergeneration ab. (Jansen, Pohlmann: "Kryptographie in der Telematik", ntz 38 (1985)9, 636...638):

So beruht ein bekanntes Public-Key-Verfahren beispielsweise darauf, daß es ganz einfach ist, durch Multiplikation einer Anzahl von Primzahlen eine große natürliche Zahl zu errechnen, daß es aber kaum möglich ist, diese große natürliche Zahl wieder in ihre Primfaktoren zu zerlegen (Rivest, Shamir, Adleman: "A method for obtaining digital signatures and public-key cryptosystems", Communications of the ACM 21(1978)2, 120... 126). Bei diesem sog. RSA- Verfahren wird aus einem Klartext M ein Schlüsseltext C durch eine mathematische Tranformation

$$C = M^e \ (\text{mod } n)$$

erhalten. Die inverse Transformation, mit der man aus dem Schlüsseltext wieder den Klartext erhält, lautet

$$M = C^d \ (\text{mod } n).$$

M ist eine positive ganze Zahl, die zwischen O und n-1 liegen muß. Es ergeben sich dann die Schlüsselpaare

    (e,n) für den öffentlichen Schlüssel und
    (d,n) für den geheimen Schlüssel.

Bei der Errechnung der Schlüssel wird zunächst n als Produkt aus zwei sehr großen, frei gewählten Primzahlen p und q berechnet (diese Zahlen werden mittels eines Zufallszahlengenerators erzeugt und bleiben geheim):

$$n = p \cdot q, \text{ mit p ungleich q.}$$

Da es zu enormen Schwierigkeiten führt, umgekehrt aus n die Primzahlen p und q zu ermitteln, kann n als Bestandteil des öffentlichen Schlüssels bekanntgegeben werden.

Als geheimer Schlüssel d wird eine große (in ernsthaften Anwendungen ca. 100stellige), frei gewählte ganze Zahl verwendet, die relativ prim zu (p-1)·(q-1) sein muß. Hat man so p, q und d bestimmt, so läßt sich der öffentliche Schlüssel e durch "Inverse Multiplikati-

on":

$$e \cdot d \ (mod(p-1) \cdot (q-1)) = 1$$

erzeugen. Für Primzahlerzeugung und Schlüsselgenerierung existieren spezielle mathematische Algorithmen. Auf Grund der komplexen Rechenvorgänge ist die mögliche Durchsatzrate allerdings gering (einige zig bit/s).

Die Anfangsstellung der in der Verbindungseinrichtung CU/A vorgesehenen, den einzelnen Netzabschlußeinheiten NT/A zugeordneten Scrambler Scr und der in den Netzabschlußeinheiten NT/A vorgesehenen Descrambler Descr kann wiederholt geändert werden, indem die Verbindungseinrichtung CU/A mittels eines Zufallszahlengenerators Z jeweils eine zufällige neue Anfangsstellung für die den einzelnen Netzabschlußeinheiten NT/A zugeordneten Scrambler Scr ermittelt, in einer Tabelle ablegt und die jeweils zugehörige Anfangsstellung des zugehörigen Descramblers Descr mit dem öffentlichen Schlüssel verschlüsselt der betreffenden Netzabschlußeinheit NT/A mitteilt; diese Kommunikation kann mittels eines einfachen Protokolls in einem Datenkanal im TDM-/TDMA-Overhead bzw. in hierfür bestimmten ATM-Zellen vor sich gehen. In der Netzabschlußeinheit NT/A wird die Mitteilung mit dem zugehörigen geheimen Schlüssel entschlüsselt, wonach die Änderung von einem bestimmten Pulsrahmen an durchgeführt wird.

Die Netzabschlußeinheit NT/A kann in gewissen Zeitabständen neue Schlüssel errechnen und den von ihr errechneten neuen öffentlichen Schlüssel der übergeordneten Verbindungseinrichtung CU/A übermitteln; die Verbindungseinrichtung CU/A kann dann nach Ermittlung einer neuen Scrambler-Anfangsstellung die zugehörige Descrambler-Anfangsstellung mit dem neuen öffentlichen Schlüssel verschlüsseln und der betreffenden Netzabschlußeinheit NT/A die Änderung der Anfangsstellung mitteilen, die dann wiederum von einem bestimmten Pulsrahmen an durchgeführt wird. Nicht nur die Anfangseinstellung, sondern auch die Struktur von Scrambler und Descrambler können zur Erschwerung unbefugten Mithörens in regelmäßigen oder unregelmäßigen Zeitabständen verändert werden.

Eine andere Möglichkeit der Sicherung des Teilnehmeranschlußnetzes gegen unberechtigten Zugriff auf darin in Multiplexrahmen übertragene Digitalsignale besteht beispielsweise darin, daß die Zuordnung der Zeitschlitze zu den einzelnen Netzabschlußeinheiten NT/A in dem für eine TDM-Signalübertragung von der übergeordneten Verbindungseinrichtung CU/A zu den Netzabschlußeinheiten NT/A hin maßgebenden Downstream-Multiplexrahmen wiederholt geändert wird: Die Verbindungseinrichtung CU/A ermittelt dabei mittels eines Zufallszahlengenerators eine zufällige neue Zeitschlitzzuordnung für die einzelnen Netzabschlußeinheiten NT/A, legt sie in einer Tabelle ab und teilt die zeitliche Lage der (des) ihr zugeordneten Zeitschlitze(s) mit dem von der betreffenden Netzabschlußeinheit NT/A übermittelten öffentlichen Schlüssel verschlüsselt der betreffenden Netzabschlußeinheit NT/A mit; diese Kommunikation kann wiederum mittels eines einfachen Protokolls in einem Datenkanal im TDM-/TDMA-Overhead vor sich gehen. In der Netzabschlußeinheit NT/A wird die Mitteilung mit dem zugehörigen geheimen Schlüssel entschlüsselt, wonach die Änderung von einem bestimmten Multiplexrahmen an durchgeführt wird.

Auch hier kann die Netzabschlußeinheit NT/A von Zeit zu Zeit neue Schlüssel errechnen und den von ihr errechneten neuen öffentlichen Schlüssel der Verbindungseinrichtung CU/A übermitteln, die dann von der nächsten Änderung der Zeitschlitzzuordnung an die jeweils neue Zeitschlitzlage mit dem neuen öffentlichen Schlüssel verschlüsselt der betreffenden Netzabschlußeinheit NT/A mitteilt. Die Netzabschlußeinheit NT/A kann nicht über längere Zeit auf einen nicht ihr zugeordneten Zeitschlitz zugreifen, was ein unbefugtes Mithören unmöglich macht.

Eine andere Möglichkeit der Sicherung des Teilnehmeranschlußnetzes gegen unberechtigten Zugriff auf darin in Form von ATM-Zellen übertragene Digitalsignale besteht beispielsweise darin, daß die Zuordnung von Adressen zu den einzelnen teilnehmerseitigen Netzabschlußeinheiten NT/A wiederholt geändert wird: Die übergeordnete Verbindungseinrichtung CU/A ermittelt dabei mittels eines Zufallszahlengenerators eine zufällige neue Adressenzuordnung für die einzelnen teilnehmerseitigen Netzabschlußeinheiten NT/A, legt sie in einer Tabelle fest und teilt die jeweilige neue Adresseninformation mit einem von der jeweiligen teilnehmerseitigen Netzabschlußeinheit NT/A übermittelten öffentlichen Schlüssel verschlüsselt der betreffenden teilnehmerseitigen Netzabschlußeinheit NT/A mit, wobei diese Kommunikation wiederum in hierfür bestimmten ATM-Zellen vor sich gehen kann. In der Netzabschlußeinheit NT/A wird die Mitteilung mit dem zugehörigen geheimen Schlüssel entschlüsselt, wonach die Änderung von einem bestimmten Multiplexrahmen an berücksichtigt wird.

Wiederum kann die teilnehmerseitige Netzabschlußeinheit NT/A von Zeit zu Zeit einen von ihr errechneten neuen öffentlichen Schlüssel der übergeordneten Verbindungseinrichtung CU/A übermitteln, die ihrerseits wiederum nach Ermittlung einer neuen Adressenzuordnung zu den teilnehmerseitigen Netzabschlußeinheiten NT/A und neuem Verschlüsseln der jeweiligen Adresseninformation jeder teilnehmerseitigen Netzabschlußeinheit NT/A individuell die Umordnung der Adressenzuteilung mitteilt, die danach von einem bestimmten Multiplexrahmen an berücksichtigt wird.

Es sei an dieser Stelle besonders bemerkt, daß die wiederholte Änderung der Zuordnung von Adressen zu den einzelnen Teilnehmern nicht an ein bidirektional betreibbares Teilnehmeranschlußnetz mit einem oder mehreren jeweils einer Mehrzahl von teilnehmerseitigen Netzabschlußeinheiten gemeinsamen, sich zwischen solchen teilnehmerseitigen Netzabschlußeinheiten und einer übergeordneten Verbindungseinrichtung erstreckenden Koaxialleitungs-Baumnetz(en) gebunden ist, sondern daß auch ganz allgemein zur Datensicherung in einem Telekommunikationssystem mit einer Mehrzahl von dezentralen Telekommunikationseinrichtungen und einer demgegenüber zentralen Telekommunikationseinrichtung, in dem die Signalübertragung zu den teilnehmerseitigen Netzabschlußeinheiten hin in einem ATM-Zellenstrom vor sich geht, die Zuordnung von Adressen zu den einzelnen teilnehmerseitigen Netzabschlußeinheiten wiederholt geändert werden kann, indem die übergeordnete Verbindungseinrichtung mittels eines Zufallszahlengenerators eine zufällige neue Adressenzuordnung für die einzelnen teilnehmerseitigen Netzabschlußeinheiten ermittelt und die jeweilige neue Adresseninformation mit einem von der jeweiligen teilnehmerseitigen Netzabschlußeinheit übermittelten öffentlichen Schlüssel verschlüsselt der betreffenden teilnehmerseitigen Netzabschlußeinheit mitteilt, die diese Mitteilung mit dem zugehörigen geheimen Schlüssel entschlüsselt, wonach die Änderung von einem bestimmten Multiplexrahmen an berücksichtigt wird.

Die in der Zeichnung in der Verbindungseinrichtung CU/A und in den Netzabschlußeinheiten NT/A angedeuteten Schlüsseleinrichtungen S als solche können in an sich bekannter Weise in Form digitaler Rechenwerke ausgeführt sein, so daß weitere Erläuterungen dazu an dieser Stelle nicht erforderlich sind; das gleiche gilt auch für den in der Verbindungseinrichtung CU/A angedeuteten Zufallszahlengenerator Z.

**Patentansprüche**

1. Verfahren zur Datensicherung in einem Telekommunikationssystem mit einer Mehrzahl von dezentralen Telekommunikationseinrichtungen (NT/A) und einer demgegenüber zentralen Telekommunikationseinrichtung (CU/A),
   demzufolge aus einem in einer dezentralen Telekommunikationseinrichtung (NT/A) vorgegebenen geheimen Schlüssel ein öffentlicher Schlüssel ermittelt wird, der in Aufwärtsrichtung zur zentralen Telekommunikationseinrichtung (CU/A) übermittelt wird, wo er zum Verschlüsseln von (Sekundärschlüssel-) Informationen zur Anpassung der dezentralen Einrichtung (NT/A) an in der zentralen Einrichtung (CU/A) für diese dezentrale Einrichtung (NT/A) individuell vorgesehene, wiederholt geänderte Übertragungsmodalitäten benutzt wird,
   **dadurch gekennzeichnet,**
   **daß** in einem bidirektional betreibbaren Teilnehmeranschlußnetz mit einem oder mehreren jeweils einer Mehrzahl von teilnehmerseitigen Netzabschlußeinheiten (NT/A) gemeinsamen, sich zwischen solchen teilnehmerseitigen Netzabschlußeinheiten (NT/A) und einer übergeordneten Verbindungseinrichtung (CU/A) erstreckenden Koaxialleitungs-Baumnetz(en) (CN),
in dem diese(s) Koaxialleitungs-Baumnetz(e) (CN) jeweils über eine Konvertereinrichtung (OCC) an einen Lichtwellenleiter (OB) vorzugsweise eines optische Verzweiger (V) enthaltenden Lichtwellenleiter-Baumnetzes (OB) angeschlossen und über diese(n) Lichtwellenleiter (OB) mit der zugehörigen Verbindungseinrichtung (CU/A) verbunden sein kann (können)
und in dem die Signalübertragung von der zugehörigen Verbindungseinrichtung (CU/A) aus zu den teilnehmerseitigen Netzabschlußeinheiten (NT/A) hin in einem Multiplexrahmen oder in einem ATM-Zellenstrom vor sich geht und die Signalübertragung von den teilnehmerseitigen Netzabschlußeinheiten (NT/A) aus zu der zugehörigen Verbindungseinrichtung (CU/A) hin jeweils in einem der jeweiligen teilnehmerseitigen Netzabschlußeinheit (NT/A) zugeordneten Zeitkanal des Multiplexrahmens vorzugsweise unter adaptiver Steuerung der Zeitlage des Zeitkanals in einem TDMA-Verfahren bzw. mittels ATM-Zellen in einem TDMA-Verfahren vor sich geht,
zur Datensicherung jeweils aus einem in der teilnehmerseitigen Netzabschlußeinheit (NT/A) vorgegebenen geheimen Schlüssel der öffentliche Schlüssel ermittelt wird, der in Aufwärtsrichtung zur Verbindungseinrichtung (CU/A) übermittelt wird, wo er zum Verschlüsseln von (Sekundärschlüssel-)Informationen zur Anpassung der teilnehmerseitigen Netzabschlußeinheit (NT/A) an in der Verbindungseinrichtung (CU/A) für diese teilnehmerseitigen Netzabschlußeinheit (NT/A) individuell vorgesehene, wiederholt geänderte Übertragungsmodalitäten benutzt wird.

2. Verfahren nach Anspruch 1,
   **dadurch gekennzeichnet,**
   **daß** die Anfangsstellung und/oder die Struktur von in der übergeordneten Verbindungseinrichtung (CU/A) vorgesehenen, den einzelnen teilnehmerseitigen Netzabschlußeinheiten (NT/A) zugeordneten Scramblern (Scr) und von in den teilnehmerseitigen Netzabschlußeinheiten (NT/A) vorgesehenen Descramblern (Descr) zu Rahmenbeginn wiederholt geändert wird, indem die übergeordnete Verbindungseinrichtung (CU/A) mittels eines Zufallszahlengenerators jeweils eine zufällige neue Anfangsstellung und/oder Struktur für die den einzelnen teilnehmerseitigen Netzabschlußeinheiten (NT/A) zugeordneten Scrambler (Scr) ermittelt und die zugehörige Anfangsstellung und/oder Struktur des zugehörigen Descramblers (Descr) mit einem von der jeweiligen teilnehmerseitigen Netzabschlußeinheit (NT/A) übermittelten öffentlichen Schlüssel verschlüsselt der betreffenden teilnehmerseitigen Netzabschlußeinheit (NT/A) mitteilt, die diese Mitteilung mit dem zugehörigen geheimen Schlüssel entschlüsselt, wonach die Änderung von einem bestimmten Pulsrahmen an durchgeführt wird.

3. Verfahren nach Anspruch 2,
**dadurch gekennzeichnet,**
**daß** die teilnehmerseitige Netzabschlußeinheit (NT/A) nach einer bestimmten Anzahl von Pulsrahmen einen von ihr errechneten neuen öffentlichen Schlüssel der übergeordneten Verbindungseinrichtung (CU/A) übermittelt, die ihrerseits wiederum nach Ermittlung einer neuen Scrambler-Anfangsstellung und /oder Struktur und neuem Verschlüsseln der jeweils zugehörigen Descrambler-Anfangsstellung und/oder Struktur jeder teilnehmerseitigen Netzabschlußeinheit (NT/A) individuell die Änderung der Anfangsstellung und/oder Struktur mitteilt, die danach von einem bestimmten Pulsrahmen an durchgeführt wird.

4. Verfahren nach Anspruch 1,
**dadurch gekennzeichnet,**
**daß** die Zuordnung der Zeitschlitze zu den einzelnen teilnehmerseitigen Netzabschlußeinheiten (NT/A) im Downstream-Multiplexrahmen wiederholt geändert wird, indem die übergeordnete Verbindungseinrichtung (CU/A) mittels eines Zufallszahlengenerators eine zufällige neue Zeitschlitzzuordnung für die einzelnen teilnehmerseitigen Netzabschlußeinheiten (NT/A) ermittelt und die zeitliche Lage der (des) ihr zugeordneten Zeitschlitze(s) mit einem von der jeweiligen teilnehmerseitigen Netzabschlußeinheit (NT/A) übermittelten öffentlichen Schlüssel verschlüsselt der betreffenden teilnehmerseitigen Netzabschlußeinheit (NT/A) mitteilt, die diese Mitteilung mit dem zugehörigen geheimen Schlüssel entschlüsselt, wonach die Änderung von einem bestimmten Multiplexrahmen an durchgeführt wird.

5. Verfahren nach Anspruch 4,
**dadurch gekennzeichnet,**
**daß** die teilnehmerseitige Netzabschlußeinheit (NT/A) nach einer bestimmten Anzahl von Multiplexrahmen einen von ihr errechneten neuen öffentlichen Schlüssel der übergeordneten Verbindungseinrichtung (CU/A) übermittelt, die ihrerseits wiederum nach Ermittlung einer neuen Zeitschlitzzuordnung zu den teilnehmerseitigen Netzabschlußeinheiten (NT/A) und neuem Verschlüsseln der jeweiligen Zeitschlitzlage jeder teilnehmerseitigen Netzabschlußeinheit (NT/A) individuell die Umordnung der Zeitschlitzzuteilung mitteilt, die danach von einem bestimmten Multiplexrahmen an durchgeführt wird.

6. Verfahren nach Anspruch 1,
**dadurch gekennzeichnet,**
**daß** die Zuordnung von Adressen zu den einzelnen teilnehmerseitigen Netzabschlußeinheiten (NT/A) wiederholt geändert wird, indem die übergeordnete Verbindungseinrichtung (CU/A) mittels eines Zufallszahlengenerators eine zufällige neue Adressenzuordnung für die einzelnen teilnehmerseitigen Netzabschlußeinheiten (NT/A) ermittelt und die jeweilige neue Adresseninformation mit einem von der jeweiligen teilnehmerseitigen Netzabschlußeinheit (NT/A) übermittelten öffentlichen Schlüssel verschlüsselt der betreffenden teilnehmerseitigen Netzabschlußeinheit (NT/A) mitteilt, die diese Mitteilung mit dem zugehörigen geheimen Schlüssel entschlüsselt, wonach die Änderung von einem bestimmten Multiplexrahmen an berücksichtigt wird.

7. Verfahren nach Anspruch 6,
**dadurch gekennzeichnet,**
**daß** die teilnehmerseitige Netzabschlußeinheit (NT/A) nach einer bestimmten Anzahl von Multiplexrahmen einen von ihr errechneten neuen öffentlichen Schlüssel der übergeordneten Verbindungseinrichtung (CU/A) übermittelt, die ihrerseits wiederum nach Ermittlung einer neuen Adressenzuordnung zu den teilnehmerseitigen Netzabschlußeinheiten (NT/A) und neuem Verschlüsseln der jeweiligen Adresseninformation jeder teilnehmerseitigen Netzabschlußeinheit (NT/A) individuell die Umordnung der Adressenzuteilung mitteilt, die danach von einem bestimmten Multiplexrahmen an berücksichtigt wird.

8. Verfahren nach einem der Ansprüch 1 bis 7,
**dadurch gekennzeichnet,**
**daß** die Übertragungsmodalitäten für verschiedene teilnehmerseitige Netzabschlußeinheiten (NT/A) oder Gruppen von teilnehmerseitigen Netzabschlußeinheiten (NT/A) zu verschiedenen Zeitpunkten geändert werden.

## Claims

1. Method for data back-up in a telecommunications system having two or more decentralized telecommunications devices (NT/A) and having a telecommunications device (CU/A) which is centralized with respect to them,
with in consequence a public key being determined from a secret key which is predetermined in a decentralized telecommunications device (NT/A), which public key is transmitted in the uplink direction to the central telecommunications device (CU/A) where it is used for scrambling (secondary key) information in order to match the decentralized device (NT/A) to transmission modalities which are changed repeatedly and are provided individually in the central device (CU/A) for this decentralized device (NT/A),

**characterized**

**in that**, in a subscriber access network which can be operated bidirectionally, having one or more coaxial line tree networks (CN) which are in each case common to two or more subscriber-end network termination units (NT/A) and extend between such subscriber-end network termination units (NT/A) and a higher-level connection device (CU/A),

in which this or these coaxial line tree network or networks (CN) can in each case be connected via a converter device (OCC) to an optical waveguide (OB), preferably of an optical waveguide tree network (OB) which contains optical splitters (V), and which can be connected to the associated connection device (CU/A) via this or these optical waveguide or waveguides (OB), and in which the signal transmission from the associated connection device (CU/A) to the subscriber-end network termination units (NT/A) is based on a multiplex frame or an ATM cell stream, and the signal transmission from the subscriber-end network termination units (NT/A) to the associated connection device (CU/A) in each case takes place in a time channel, which is associated with the respective subscriber-end network termination unit (NT/A), of the multiplex frame with the timing of the time channel being controlled adaptively when using a TDMA method or by means of ATM cells when using a TDMA method, with the public key in each case being determined from a secret key, which is predetermined in the subscriber-end network termination unit (NT/A), for data security, and being transmitted in the uplink direction to the connection device (CU/A), where it is used for scrambling (secondary key) information in order to match the subscriber-end network termination unit (NT/A) to transmission modalities which are changed repeatedly and are provided individually in the connection device (CU/A) for this subscriber-end network termination unit (NT/A).

2. The method as claimed in Claim 1,

**characterized**

**in that** the initial position and/or the structure of scramblers (Scr) which are provided in the higher-level connection device (CU/A) and are associated with the individual subscriber-end network termination units (NT/A), and of descramblers (Descr), which are provided in the subscriber-end network termination units (NT/A), are/is changed repeatedly at the start of the frame, by the higher-level connection device (CU/A) in each case using a random number generator to determine a random new start position and/or structure for the scramblers (Scr) which are associated with the individual subscriber-end network termination units (NT/A), and signals the associated start position and/or structure of the associated descrambler (Descr) to the relevant subscriber-end network termination unit (NT/A), scrambled by means of a public key which is transmitted by the respective subscriber-end network termination unit (NT/A), which descrambles this message using the associated secret key, following which the change is carried out from a specific pulse frame.

3. Method according to Claim 2,

**characterized**

**in that** the subscriber-end network termination unit (NT/A) transmits a new public key, which has been calculated by it, to the higher-level connection device (CU/A) after a specific number of pulse frames, and the connection device (CU/A) itself once again individually signals the change to the start position and/or structure, after determining a new scrambler start position and/or structure and new scrambling of the respectively associated descrambler start position and/or structure of each subscriber-end network termination unit (NT/A), which is then carried out from a specific pulse frame.

4. Method according to Claim 1,

**characterized**

**in that** the association of the time slots with the individual subscriber-end network termination units (NT/A) is changed repeatedly in the downstream multiplex frame, by the higher-level connection device (CU/A) using a random number generator to determine a random new time slot association for the individual subscriber-end network termination units (NT/A), and signals the timing of the time slot or slots which is or are associated with it to the relevant subscriber-end network termination unit (NT/A), scrambled by means of a public key which is transmitted by the respective subscriber-end network termination unit (NT/A), which descrambles this message using the associated secret key, after which the change is carried out from a specific multiplex frame.

5. Method according to Claim 4,

**characterized**

**in that** the subscriber-end network termination unit (NT/A) transmits a new public key, which has been calculated by it, to the higher-level connection device (CU/A) after a specific number of multiplex frames, which connection device (CU/A) itself signals the reorganization of the time slot allocation individually to each subscriber-end network termination unit (NT/A) once again after determining a new time slot association with the subscriber-end network termination units (NT/A) and new scrambling of the respective time slot position, which reorganization of the time slot allocation is then carried out from a specific multiplex frame.

6. Method according to Claim 1, **characterized in that** the association of addresses with the individual subscriber-end network termination units (NT/A) is changed repeatedly, by the higher-level connection device (CU/A) using a random number generator to determine a random new address association for the individual subscriber-end network termination units (NT/A) and signals the respective new address information to the relevant subscriber-end network termination unit (NT/A), scrambled by means of a public key which is transmitted by the respective subscriber-end network termination unit (NT/A), which descrambles this message using the associated secret key, after which the change is taken into account from a specific multiplex frame.

7. Method according to Claim 6, **characterized in that** the subscriber-end network termination unit (NT/A) transmits a new public key, which is calculated by it, to the higher-level connection device (CU/A) after a specific number of multiplex frames, which connection device (CU/A) itself once again signals the reorganization of the address allocation individually to each subscriber-end network termination unit (NT/A) after determining a new address association for the subscriber-end network termination units (NT/A) and new scrambling of the respective address information, which reorganization of the address allocation is then taken into account from a specific multiplex frame.

8. Method according to one of Claims 1 to 7, **characterized in that** the transmission modalities for different subscriber-end network termination units (NT/A) or groups of subscriber-end network termination units (NT/A) are changed at different times.

## Revendications

1. Procédé destiné à la protection des données dans un système de télécommunication comportant une pluralité de dispositifs (NT/A) décentralisés de télécommunication et un dispositif (CU/A) de télécommunication, par contre, centralisé, selon lequel on détermine, à partir d'une clef secrète prédéterminée dans un dispositif (NT/A) décentralisé de télécommunication, une clef publique, qui est communiquée dans le sens ascendant au dispositif (CU/A) centralisé de télécommunication, dans lequel elle est utilisée pour décrypter des informations (de clef secondaire) destinées à l'adaptation du dispositif décentralisé (NT/A) à des modalités de transmission, prévues dans le dispositif centralisé (CU/A) individuellement pour ce dispositif décentralisé (NT/A),

**caractérisé par le fait que**, dans un réseau de raccordement d'abonnés, exploitable d'une façon bidirectionnelle et comportant un ou plusieurs réseaux arboriformes à câbles coaxiaux (CN), communs, dans chaque cas, à une pluralité d'unités (NT/A) de terminaison du réseau, côté abonnés, et qui se développent entre de telles unités (NT/A) de terminaison du réseau, côté abonnés, et un dispositif de jonction de niveau supérieur (CU/A),

dans lequel ce ou ces réseaux arboriformes à câbles coaxiaux (CN) sont raccordés, chacun par l'intermédiaire d'un dispositif convertisseur (OCC), à un guide d'ondes optiques (OB), d'une façon préférentielle d'un réseau arboriforme à guides d'ondes optiques (OB) comprenant des répartiteurs optiques (V) et peut ou peuvent être reliés, par l'intermédiaire de ce ou de ces guides d'ondes optiques (OB), au dispositif de jonction (CU/A) correspondant et

dans lequel la transmission des signaux venant du dispositif de jonction (CU/A) correspondant et allant vers les unités (NT/A) de terminaison du réseau, côté abonnés, se fait dans une trame multiplex ou dans un flux de cellules ATM (ou MTA) et la transmission des signaux venant des unités (NT/A) de terminaison du réseau, côté abonnés, et allant vers le dispositif de jonction (CU/A) correspondant se fait, dans chaque cas, dans un canal temporel de la trame multiplex affecté à l'unité (NT/A) respective de terminaison du réseau, côté abonnés, d'une façon préférentielle sous contrôle adaptatif de la position temporelle du canal temporel, selon un procédé TDMA (ou AMRT) ou, respectivement, au moyen de cellules ATM (ou MTA) dans un procédé TDMA (ou AMRT),

pour la protection des données, on détermine, dans chaque cas, à partir d'une clef secrète prédéterminée dans l'unité (NT/A) de terminaison du réseau, côté abonnés, la clef publique qui est communiquée, dans le sens ascendant, au dispositif de jonction (CU/A), dans lequel elle est utilisée pour décrypter des informations (de clef secondaire) destinées à l'adaptation de l'unité (NT/A) de terminaison du réseau, côté abonnés, , à des modalités de transmission, prévues dans le dispositif de jonction (CU/A) individuellement pour cette unité (NT/A) de terminaison du réseau, côté abonnés, et modifiées d'une façon répétitive.

2. Procédé selon la revendication 1 **caractérisé par le fait que** la position de départ et/ou la structure de codeurs, prévus dans le dispositif de jonction de niveau supérieur (CU/A) et affectés aux différentes unités (NT/A) de terminaison du réseau, côté abonnés, et de décodeurs prévus dans les unités (NT/A) de terminaison du réseau, côté abonnés, sont modifiées, d'une façon répétitive, au début de la trame, par le fait que le dispositif de jonction de niveau supérieur (CU/A) détermine, au moyen d'un générateur de nombres aléatoires, dans chaque cas, une nouvelle position aléatoire de départ et/ou une nouvelle structure aléatoire pour les codeurs affectés aux différentes unités (NT/A) de terminaison du réseau, côté abonnés, et communique, sous forme cryptée avec une clef publique communiquée par l'unité (NT/A) respective de terminaison du réseau, côté abonnés, la position de départ correspondante et/ou la structure correspondante du décodeur correspondant (Descr), à l'unité (NT/A) concernée de terminaison du réseau, côté abonnés, laquelle décrypte cette information avec la clef secrète correspondante, à la suite de quoi la modification devient effective à partir d'une trame d'impulsions déterminée.

**3.** Procédé selon la revendication 2
**caractérisé par le fait**
**que** l'unité (NT/A) de terminaison du réseau, côté abonnés, transmet, après un certain nombre de trames d'impulsions, une nouvelle clef publique, qu'elle a calculée, au dispositif de jonction de niveau supérieur (CU/A), lequel, de son côté, communique, de nouveau après détermination d'une nouvelle position de départ du codeur et/ou d'une nouvelle structure et nouveau décryptage de la position, correspondante dans chaque cas, de départ du décodeur et/ou de la structure, correspondante dans chaque cas, individuellement à chaque unité (NT/A) de terminaison du réseau, côté abonnés, la modification de la position de départ et/ou de la structure, qui est ensuite exécutée à partir d'une trame d'impulsions déterminée.

**4.** Procédé selon la revendication 1
**caractérisé par le fait**
**que** la correspondance entre les fenêtres temporelles et les différentes unités (NT/A) de terminaison du réseau, côté abonnés, est modifiée d'une façon répétitive dans la trame multiplex dans le sens descendant (ou downstream) par le fait que le dispositif de jonction de niveau supérieur (CU/A) détermine, au moyen d'un générateur de nombres aléatoires, une nouvelle affectation aléatoire des fenêtres de temps pour les différentes unités (NT/A) de terminaison du réseau, côté abonnés, et communique, sous forme cryptée avec une clef publique communiquée par l'unité (NT/A) respective de terminaison du réseau, côté abonnés, la position dans le temps de la ou des fenêtres de temps, qui leur sont affectées, à l'unité (NT/A) concernée de terminaison du réseau, côté abonnés, qui décrypte cette information avec la clef secrète correspondante, à la suite de quoi la modification est exécutée à partir d'une trame multiplex déterminée.

**5.** Procédé selon la revendication 4
**caractérisé par le fait**
**que** l'unité (NT/A) de terminaison du réseau, côté abonnés, transmet, après un certain nombre de trames multiplex, une nouvelle clef publique, qu'elle a calculée, au dispositif de jonction de niveau supérieur (CU/A), lequel, de son côté, de nouveau après détermination d'une nouvelle affectation des fenêtres de temps aux unités (NT/A) de terminaison du réseau, côté abonnés, et un nouveau cryptage de la position respective des fenêtres de temps, communique individuellement à chaque unité (NT/A) de terminaison du réseau, côté abonnés, le changement de l'ordre d'affectation des fenêtres de temps, qui est exécuté à partir d'une trame multiplex déterminée.

**6.** Procédé selon la revendication 1
**caractérisé par le fait**
**que** la correspondance entre les adresses et les différentes unités (NT/A) de terminaison du réseau, côté abonnés, est modifiée d'une façon répétitive par le fait que le dispositif de jonction de niveau supérieur (CU/A) détermine, au moyen d'un générateur de nombres aléatoires, une nouvelle affectation aléatoire des fenêtres de temps pour les différentes unités (NT/A) de terminaison du réseau, côté abonnés, et communique, sous forme cryptée avec une clef publique communiquée par l'unité (NT/A) respective de terminaison du réseau, côté abonnés, la nouvelle information respective d'adresses, à l'unité (NT/A) concernée de terminaison du réseau, côté abonnés, qui décrypte cette information avec la clef secrète correspondante, à la suite de quoi la modification est exécutée à partir d'une trame multiplex déterminée.

**7.** Procédé selon la revendication 6
**caractérisé par le fait**
**que** l'unité (NT/A) de terminaison du réseau, côté abonnés, transmet, après un certain nombre de trames multiplex, une nouvelle clef publique, qu'elle a calculée, au dispositif de jonction de niveau supérieur (CU/A), lequel, de son côté, de nouveau après détermination d'une nouvelle affectation des adresses aux unités (NT/A) de terminaison du réseau, côté abonnés, et nouveau cryptage de l'information d'adresses respective, communique individuellement à chaque unité (NT/A) de terminaison du réseau, côté abonnés, le changement de l'ordre d'affectation des adresses, qui est exécuté à partir d'une trame multiplex déterminée.

**8.** Procédé selon l'une des revendications 1 à 7

**caractérisé par le fait**

**que** les modalités de transmission pour différentes unités (NT/A) de terminaison du réseau, côté abonnés, ou différents groupes d'unités (NT/A) de terminaison du réseau, côté abonnés, sont modifiées à des instants différents.

EP 0 784 891 B1